# EUROPÄISCHE PATENTSCHRIFT

(11) **EP 0 975 113 B1**
(45) Veröffentlichungstag und Bekanntmachung des Hinweises auf die Patenterteilung: **30.05.2007**
(21) Anmeldenummer: 99113314.1
(22) Anmeldetag: 09.07.1999
(51) Int. Cl.: G06F 1/10, H04J 3/06, H04Q 11/04

(54) **Verfahren zur Synchronisation von im Verbund arbeitenden Vermittlungseinrichtungen**
Method for synchronising interconnected switching devices
Méthode de synchronisation de dispositifs de commutation fonctionnant en interconnection

(30) Priorität: 24.07.1998 DE 19833281
(43) Veröffentlichungstag der Anmeldung: 26.01.2000
(73) Patentinhaber: Tenovis GmbH & Co. KG, 60362 Frankfurt am Main (DE)
(72) Erfinder: Diehl, Rolf, 55578 Wallertheim (DE); Sulzbacher, Martina, 64625 Bensheim (DE)
(74) Vertreter: Walkenhorst, Andreas

(56) Entgegenhaltungen:
- EP-A- 0 530 393
- EP-A- 0 583 612
- DE-C- 4 131 061
- US-A- 5 577 075

## Beschreibung

### Stand der Technik

Bisher synchronisierte sich jede Vermittlungseinrichtung in einem Anlagenverbund auf den Takt einer Amtstaktleitung DIVO (digitale Vermittlung Ort), falls sie zu einer solchen DIVO-Leitung Zugang hatte. Ein externer Taktgenerator wurde nur an der Vermittlungseinrichtung dem Takt auf der DIVO-Leitung vorgezogen, an der der externe Taktgenerator angeschlossen war.

Das Dokument US-A-5 577 075 offenbart einen Mechanismus zur Synchronisation mehreren distribuierten Vermittlungsstellen, wobei jede Vermittlungsstelle als Master- oder Slave-Taktgeber auftreten kann. Jede Vermittlungsstelle verfügt über einen Mechanismus, zur Selektion des Takts mit der höchste Güte oder Qualität. Einen Mechanismus zur Synchronisation mit einer externen Taktquelle ist nicht vorgesehen.

### Vorteile der Erfindung

Mit den Maßnahmen gemäß Anspruch 1 ist es möglich, daß sich alle Vermittlungseinrichtungen eines Anlagenverbundes auf den externen Taktgenerator als Taktnormal synchronisieren. Da dieser externe Taktgenerator einen qualitativ besseren Takt liefern kann als zum Beispiel eine angeschlossene DIVO-Leitung, wird die Qualität des Synchronisationstaktes verbessert und zwar unabhängig davon, an welcher der Vermittlungseinrichtungen der externe Taktgenerator angeschlossen ist.

Durch eine individuelle Auswahl bzw. durch Einstellung des externen Taktgenerators kann die Qualität des Synchrontaktes innerhalb des Verbundes festgelegt und verbessert werden. Vermittlungseinrichtungen, die keinen eigenen Amtsanschluß besitzen, z. B. sind nicht in allen Ländern DIVO-s vorhanden, verfügen trotzdem über einen qualitativ hochwertigen Synchronisationstakt.

Mit den Maßnahmen der Erfindung ist man nicht an die Qualität bzw. an die Qualitätsschwankungen der angeschlossenen DIVO-s gebunden. Bei einem Anlagenverbund ist gegenüber bisherigen Lösungen eine Kostenersparnis möglich, da nur an einer Vermittlungseinrichtung der Anschluß eines externen Taktgenerators erforderlich ist, und sich trotzdem alle Vermittlungseinrichtungen im Verbund darauf synchronisieren können.

### Zeichnungen

Anhand der Zeichnungen werden Ausführungsbeispiele der Erfindung näher erläutert. Es zeigen
Figur 1 den Anschluß eines externen Taktgenerators an eine Vermittlungseinrichtung und
Figur 2 ein Verbund mehrerer Vermittlungseinrichtungen mit Synchronisation.

### Beschreibung von Ausführungsbeispielen

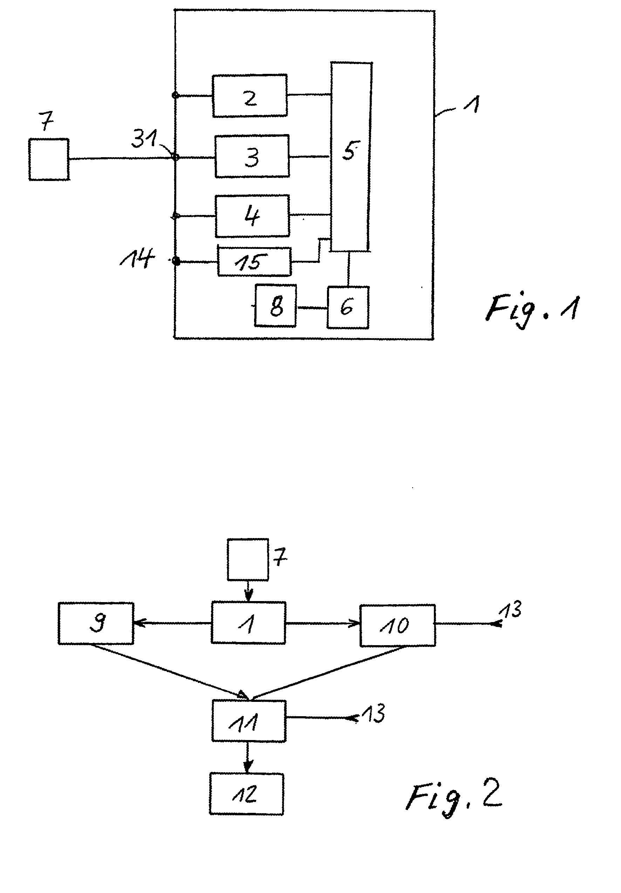

Figur 1 zeigt schematisch eine Vermittlungseinrichtung 1, z.B. eine Nebenstellenanlage mit mehreren Anschlußbaugruppen 2, 3, 4, 15 für externe Einrichtungen, beispielsweise Teilnehmerendeinrichtungen oder Amts- bzw. Verbundleitungen z.B. 14, einem Koppelnetzwerk 5 sowie einer zentralen Steuereinrichtung 6. Ein externer Taktgenerator 7 ist über einen Takteingang 31 an eine Anschlußbaugruppe - hier Anschlußbaugruppe 3 - angeschlossen. Für den Anschluß externer Einrichtungen sind mehrere Anschlüsse pro Vermittlungseinrichtung oder Anschlußbaugruppe möglich. Damit ein an eine Anschlußbaugruppe angeschlossener externer Taktgenerator 7 von der zentralen Steuereinrichtung 6 erkannt werden kann, muß die Anschlußbaugruppe, z.B. durch ein Serviceprogramm, entsprechend konfigurierbar ausgebildet sein. Dabei wird aufgrund des Anschlußorgan-Typs des Takteingangs 31 festgelegt, daß es sich um einen externen Taktgenerator handelt. Sobald die Anschlußbaugruppe feststellt, daß der externe Taktgenerator 7 einen Takt liefert, meldet sie dies der zentralen Steuereinrichtung 6. Der Steuereinrichtung 6 ist eine Auswertelogik 8 zugeordnet für die Auswahl des Synchronisationstaktes. Liefert der externe Taktgenerator 7 einen Takt, wird diesem der Vorrang als Taktnormal vor beispielsweise einem DIVO-Anschluß gegeben.

Sind gemäß Figur 2 weitere Vermittlungseinrichtungen 9, 10, 11 und 12 mit der Vermittlungseinrichtung 1 zu einem Verbund über Verbundleitungen zusammengeschlossen, wird den weiteren Vermittlungseinrichtungen 9, 10, 11 und 12, insbesondere über einen Signalisierungskanal in der Verbundleitung am Ausgang 14, z.B. den D-Kanal im ISDN, mitgeteilt, daß der externe Taktgenerator 7 als Taktnormal für Synchronisationszwecke zur Verfügung steht. Dem externen Taktgenerator 7 wird nun unabhängig davon, an welcher der Vermittlungseinrichtungen er angeschlossen ist, der Vorrang als Taktnormal zur Synchronisation für die übrigen Vermittlungseinrichtungen des Verbundes eingeräumt, so daß sich alle Vermittlungseinrichtungen auf die Vermittlungseinrichtung mit dem angeschlossenen externen Taktgenerator synchronisieren, auch wenn sie einen eigenen DIVO-Anschluß 13 aufweisen.

Durch die Logik für die Auswahl des Synchronisationstaktes wird auch gewährleistet, daß die Information über die Verfügbarkeit des externen Taktgenerators als Taktquelle zur Synchronisation an alle weiteren Vermittlungseinrichtungen des Verbundes weitergereicht wird.

Der externe Taktgenerator 7 ist vorteilhafter Weise manuell oder über eine Konfigurierungssteuerung in seiner Frequenz einstellbar.

Sind in einem Verbund von Vermittlungseinrichtungen mehr als ein externer Taktgenerator 7 angeschlossen, so greifen jene Vermittlungseinrichtungen, an die ein externer Taktgenerator angeschlossen ist, auf diesen an sie angeschlossenen als Taktnormal zurück. Die übrigen Vermittlungseinrichtungen greifen vorzugsweise auf jenen Taktgenerator als Taktnormal zurück, der die kürzeste Entfernung bzw. Signallaufzeit zu ihnen aufweist, wobei unter Entfernung hier insbesondere die Anzahl der Anlagen, die zwischen dem Taktslave und dem Taktmaster liegen, zu verstehen ist.

## Patentansprüche

1. Verfahren zur Synchronisation von im Verbund arbeitenden Vermittlungseinrichtungen (1, 9, 10, 11, 12) **gekennzeichnet durch** folgende Schritte:
- feststellen, ob ein über einen Takteingang einer Vermittlungseinrichtung (1) angeschlossener externer Taktgenerator (7) einen Takt liefert,
- auswählen dieses externen Taktgenerators (7) als Taktnormal für die Vermittlungseinrichtungen (1, 9, 10, 11, 12) des Verbundes unabhängig davon, an welcher der Vermittlungseinrichtungen der externe Taktgenerator (7) angeschlossen ist,
- mitteilen der Tatsache, daß der externe Taktgenerator (7) als Taktnormal für Synchronisationszwecke zur Verfügung steht, an die übrigen Vermittlungseinrichtungen (9, 10, 11, 12) des Verbundes.

2. Verfahren nach Anspruch 1, **dadurch gekennzeichnet, daß** dem externen Taktgenerator (7) der Vorrang vor anderen Taktsignalen im Verbund der Vermittlungseinrichtungen (1, 9, 10, 11, 12) eingeräumt wird.

3. Verfahren nach Anspruch 1 oder 2, **dadurch gekennzeichnet, daß** anhand einer der zentralen Steuereinrichtung (6) einer Vermittlungseinrichtung (1) beigeordneten Auswerterlogik (8) der externe Taktgenerator (7) erkennbar ist und als Taktnormal für den Verbund der Vermittlungseinrichtungen auswählbar ist.

4. Verfahren nach einem der Ansprüche 1 bis 3, **dadurch gekennzeichnet, daß** die Mitteilung der Verfügbarkeit des externen Taktgenerators (7) als Taktnormal an die Vermitclungseinrichcnngen (9, 10, 11, 12) des Verbundes über einen Signalisierungskanal vorgenommen wird.

5. Verfahren nach einem der Ansprüche 1 bis 4, **dadurch gekennzeichnet, daß** der externe Taktgenerator (7) an eine Anschlußbaugruppe (3) einer Vermittlungseinrichtung (1) anschließbar ist und aufgrund des Anschlußorgan-Typs feststellbar ist, daß es sich um einen externen Taktgenerator (7) handelt.

6. Verfahren nach Anspruch 5, **dadurch gekennzeichnet, daß** die Anschlußbaugruppe (3) einer Vermittlungsrichtung (1) für den Betrieb mit einem externen Taktgenerator (7) konfigurierbar ausgebildet ist.

7. Verfahren nach einem der Ansprüche 1 bis 6, **dadurch gekennzeichnet, daß** bei mehr als einem angeschlossenen Taktgenerator (7) innerhalb des Verbundes jene Vermittlungseinrichtungen, an die ein externer Taktgenerator (7) angeschlossen ist, jeweils auf den an ihr angeschlossenen als Taktnormal zurückgreifen.

8. Verfahren nach Anspruch 7, **dadurch gekennzeichnet, daß** die übrigen Vermittlungseinrichtungen (9, 10, 11, 12) an die kein externer Taktgenerator (7) angeschlossen ist, auf jenen Taktgenerator als Taktnormal zurückgreifen, der die geringste Anzahl zwischen Taktslave und Taktmaster liegender Anlagen oder die kürzeste Signallaufzeit aufweist.

9. Verfahren nach einem der Ansprüche 1 bis 8, **dadurch gekennzeichnet, daß** der externe Taktgenerator (7) manuell oder durch eine Konfigurierungssteuerung in seiner Frequenz einstellbar ist.

## Claims

1. Method for synchronizing switching devices (1, 9, 10, 11, 12) which operate in a group, **characterized by** the following steps of:
- determining whether an external clock generator (7), which is connected via a clock input of a switching device (1), provides a clock,
- selecting this external clock generator (7) as the clock standard for the switching devices (1, 9, 10, 11, 12) in the group irrespective of which of the switching devices has the external clock generator (7) connected to it,
- informing the remaining switching devices (9, 10, 11, 12) in the group of the fact that the external clock generator (7) is available as the clock standard for synchronization purposes.

2. Method according to Claim 1, **characterized in that** the external clock generator (7) is given priority over other clock signals in the group of switching devices (1, 9, 10, 11, 12).

3. Method according to Claim 1 or 2, **characterized in that** the external clock generator (7) can be detected using an evaluation logic unit (8), which is assigned to the central control device (6) of a switching device (1), and can be selected as the clock standard for the group of switching devices.

4. Method according to one of Claims 1 to 3, **characterized in that** the switching devices (9, 10, 11, 12) in the group are informed of the availability of the external clock generator (7) as the clock standard using a signalling channel.

5. Method according to one of Claims 1 to 4, **characterized in that** the external clock generator (7) can be connected to a subscriber line module (3) of a switching device (1), and the type of connecting element can be taken as a basis for determining that it is an external clock generator (7).

6. Method according to Claim 5, **characterized in that** the subscriber line module (3) of a switching device (1) can be configured for operation with an external clock generator (7).

7. Method according to one of Claims 1 to 6, **characterized in that**, when there is more than one connected clock generator (7) in the group, those switching devices which have an external clock generator (7) connected to them each revert to the clock generator connected to them as the clock standard.

8. Method according to Claim 7, **characterized in that** the remaining switching devices (9, 10, 11, 12) which do not have an external clock generator (7) connected to them revert to that clock generator as the clock standard which has the smallest number of systems between the clock slave and the clock master or has the shortest signal propagation time.

9. Method according to one of Claims 1 to 8, **characterized in that** the frequency of the external clock generator (7) can be set manually or by means of a configuration controller.

## Revendications

1. Procédé de synchronisation de dispositifs à (1, 9, 10, 11, 12) de commutation fonctionnant en interconnexion, **caractérisé par** des stades suivants :
- on constate si une horloge (7) extérieure raccordée à un dispositif (1) de commutation par une entrée d'impulsion d'horloge fournit une impulsion d'horloge,
- on sélectionne cette horloge (7) extérieure comme étant l'horloge normale pour les dispositifs (1, 9, 10, 11, 12) de commutation de l'interconnexion indépendamment de celui des dispositifs de commutation, auquel est raccordé l'horloge (7) extérieure,
- on fait part du fait que l'horloge (7) extérieure est disponible comme étant l'horloge normale à des fins de synchronisation aux autres dispositifs (9, 10, 11, 12) de commutation de la connexion.

2. Procédé suivant la revendication 1, **caractérisé en ce que** l'on accorde à l'horloge (7) extérieure la préséance sur d'autres signaux d'horloge dans l'interconnexion des dispositifs (1, 9, 10, 11, 12) de commutation.

3. Procédé suivant la revendication 1 ou 2, **caractérisé ce qu'**on peut détecter l'horloge (7) extérieure au moyen d'une logique (8) d'exploitation adjointe au dispositif (6) central de commande d'un dispositif (1) de commutation et la sélectionner comme horloge normale pour l'interconnexion des dispositifs de commutation.

4. Procédé suivant l'une des revendications 1 à 3, **caractérisé en ce que** l'on fait part de la disponibilité de l'horloge (7) extérieure comme horloge normale au dispositif (9, 10, 11, 12) de commutation de l'interconnexion par un canal de signalisation.

5. Procédé suivant l'une des revendications 1 à 4, **caractérisé en ce que** l'horloge (7) extérieure peut être raccordée à un module (3) de connexion d'un dispositif (1) de commutation et on peut constater sur la base du type d'organe de connexion que c'est une horloge (7) extérieure.

6. Procédé suivant la revendication 5, **caractérisé en ce que** le module (3) de connexion d'un dispositif (1) de commutation peut être configuré pour le fonctionnement avec une horloge (7) extérieure.

7. Procédé suivant l'une des revendications 1 à 6, **caractérisé en ce que**, s'il y a plus d'une horloge (7) raccordée au sein de l'interconnexion, chaque dispositif de commutation, auquel une horloge (7) extérieure est raccordée, s'en remet comme horloge normale respectivement à celle qui lui est raccordée.

8. Procédé suivant la revendication 7, **caractérisé en ce que** les autres dispositifs (9, 10, 11, 12) de commutation, auquel une horloge (7) extérieure n'est pas raccordée, s'en remette comme horloge normale à l'horloge qui a le nombre le plus qui a le nombre le plus petit d'installations entre l'esclave et le maître ou le temps de propagation du signal le plus court.

9. Procédé suivant l'une des revendications 1 à 8, **caractérisé en ce que** la fréquence de l'horloge (7) extérieure peut être réglée manuellement ou par une commande de configuration.
